# EUROPÄISCHE PATENTSCHRIFT

(11) **EP 0 998 844 B1**
(45) Veröffentlichungstag und Bekanntmachung des Hinweises auf die Patenterteilung: **26.03.2003**
(21) Anmeldenummer: 99120733.3
(22) Anmeldetag: 20.10.1999
(51) Int. Cl.: A01F 15/07

(54) **Rolle und Erntebergungsmaschine**
Roller and crop retrieval device
Rouleau et machine à récolter

(30) Priorität: 03.11.1998 US 185435
(43) Veröffentlichungstag der Anmeldung: 10.05.2000
(73) Patentinhaber: DEERE & COMPANY, Moline, Illinois 61265-8098 (US)
(72) Erfinder: Anstey, Henry Dennis, Ottumwa, IA 5201 (US)
(74) Vertreter: Magin, Ludwig Bernhard

(56) Entgegenhaltungen:
- EP-A- 0 152 085
- DE-A- 19 609 926
- GB-A- 2 069 403
- US-A- 4 890 449

## Beschreibung

Die Erfindung betrifft eine Rolle mit wenigstens einer Riemenlauffläche und wenigstens einem zylindrischen Endabschnitt zur Verwendung in einer Erntebergungsmaschine und eine Erntebergungsmaschine mit wenigstens einer solchen Rolle.

Die DE-A-19 609 926 offenbart eine Rundballenpresse mit mehreren in Seitenwänden drehbar gelagerten Rollen wobei eine mit einem Abstreifer versehen ist, über die eine Vielzahl von Riemen geführt ist, um einen Ballenpreßraum zu bilden. Zum Durchtritt der Rolle durch die Seitenwände weist letztere jeweils ein zylindrische Öffnung auf, die die Rolle bzw. deren Endbereich aufnimmt.

Das der Erfindung zugrunde liegende Problem wird darin gesehen, daß sich in dem Bereich zwischen der Rolle und dem Rand der Öffnung Material ansammeln kann.

Dieses Problem wird erfindungsgemäß durch die Lehre des Patentanspruchs 1 bzw. 7 gelost, wobei in den weiteren Patentansprüchen die Lösung in vorteilhafter Weise weiterentwickelnde Merkmale aufgeführt sind.

Auf diese Weise kann der Abstreifer beim Umlaufen der Rolle evtl. anhaftendes Material entfernen, bzw. solange mit sich umführen, bis es an der Wand zerrieben wird und zerfällt. Eine solche Rolle kann in bereits oestehende Erntebergungsmaschinen, z. B. Rundballenpressen oder Feldhäcksler nachträglich eingebaut werden.

Wenn der Abstreifer, bzw. mehrere Abstreifer, zu der Längsmittelachse geneigt verlaufen, streifen Sie es nicht nur von der Wandung der Öffnung ab, sondern führen es auch axial von dem kritischen Bereich weg.

Eine Neigung, bei der eine gute axiale Förderwirkung erzielt wird, liegt im Bereich zwischen 30 und 60 Grad.

Die Wirksamkeit der Erfindung kann erhöht werden, indem auf einem Endabschnitt mehrere Abstreifer vorgesehen werden, und zwar an sich gegenüberliegenden Seiten, also diametral.

Fertigungskosten können niedrig gehalten werden, wenn auf handelsübliches Material oder Halbzeuge zurückgegriffen werden kann, was bei Stangenmaterial der Fall ist.

Wenn der Abstreifer bis an das Ende der Rolle reicht, wird zudem erreicht, daß kein Umfangsbereich frei bleibt, auf dem sich das Material festsetzen könnte.

Den größten Effekt löst eine erfindungsgemäße Rolle dort aus, wo Wickelprobleme am wahrscheinlichsten sind, nämlich dort, wo faseriges Material in einem engen Spalt zwischen relativ zueinander beweglichen Teilen eindringen kann; dies ist bei einer Erntebergungsmaschine in dem Bereich der Wände der Fall, wo sich die Rolle von einem Ballenpreßraum nach außen erstreckt.

Angesichts des anfallenden Ernteguts in der Landwirtschaft, nämlich im wesentlichen Gras, hat es sich als wirksam erwiesen, daß zwischen dem Endabschnitt der Rolle und dem Umfang des Lochs ein Spalt von 6,35 mm ± 1,58 mm besteht und der Abstreifer so bemessen ist, daß er radial um ca. 4,7 mm über die Oberfläche des Endabschnitts übersteht.

Nicht nur die Öffnung, durch die sich die Rolle durch die Wand erstreckt, sondern auch der angrenzende Bereich wird störungsfrei gehalten, wenn sich der Abstreifer auch in den Ballenpreßraum hinein erstreckt, wobei es ausreicht, wenn das axial innenliegende Ende des Abstreifers einen Abstand von der Wand nach innen von ca. 5,08 bis 6,35 mm aufweist. Auf diese Weise wird auch der Lauf des ersten Riemens nicht beeinträchtigt.

Nachdem die größte Wickelneigung im Bewegungsbereich von Erntegut auftritt, tritt die beste Wirkung der Erfindung dann auf, wenn die Wände die gegenüberliegenden Seiten eines Ballenpreßraums bilden und die Rolle Riemen zum Bilden eines Ballens trägt.

In der Zeichnung ist ein nachfolgend näher beschriebenes Ausführungsbeispiel der Erfindung dargestellt. Es zeigt:
- Fig. 1: eine Rolle einer Erntebergungsmaschine in Draufsicht und gelagert in deren Wänden und
- Fig. 2: die Rolle nach Figur 1 in einem vertikalen Schnitt entlang der Linie 2-2 und in der Blickrichtung der dazugehörigen Pfeile.

Zunächst wird darauf hingewiesen, daß die Begriffe "rechts" und "links" aus dem Blickpunkt eines Betrachters zu verstehen sind, der sich hinter der Erntebergungsmaschine befindet und in die Vorwärtsfahrtrichtung blickt.

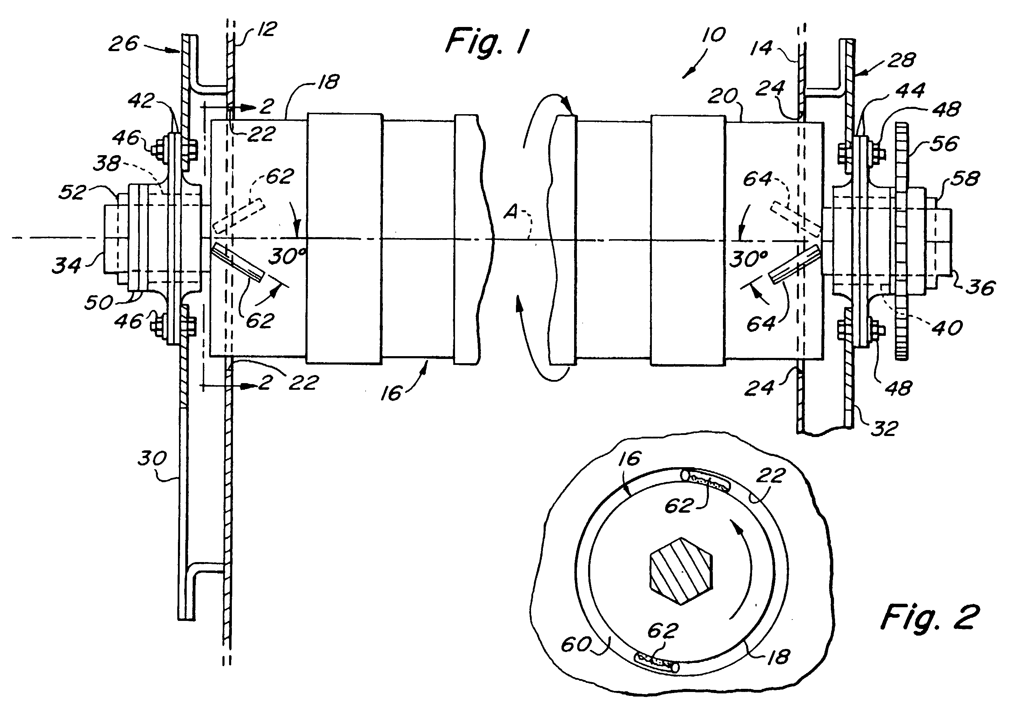

Gemäß der Zeichnung ist in Figur 1 ein Teil eines Ballenpreßraums 10 einer großen Erntebergungsmaschine in der Art einer Rundballenpresse gezeigt, wobei der Ballenpreßraum 10 rechte und linke Wände 12 bzw. 14 oder Seitenbleche einschließt. Eine Rolle 16 zum Antrieb von Riemen zum Bilden von Ballen erstreckt sich zwischen den Wanden 12 und 14 und enthält rechte und linke zylindrische Endabschnitte 18 und 20, die sich jeweils durch axial aneinander ausgerichtete kreisförmige Öffnungen 22 und 24 in den Wänden 12 und 14 erstrecken.

Rechte und linke Lagerträger 26, 28 sind jeweils an den äußeren Flächen der Wände 12 und 14 befestigt und enthalten entsprechende Tragplatten 30 und 32, die parallel zu den Wänden 12 und 14 vorgesehen sind. Die Rolle 16 enthält rechte und linke Wellenendabschnitte 34 bzw. 36, die in rechten und linken Lagern 38 und 40 aufgenommen sind, die in rechte und linke Paare von Lagerflansche 42 und 44 gepreßt sind, wobei das Paar Lagerflansche 42 mittels Schrauben 46 an der Tragplatte 30 und das Paar Lagerflansche 44 mittels Schrauben 48 an der Tragplatte 32 gesichert ist. Außerhalb des Paars Lagerflansche 42 ist ein Paar Scheiben 50 vorgesehen, auf das ein Haltestift 52 folgt, und außerhalb des Paars Lagerflansche 44 befindet sich eine Scheibe 54, auf die ein Zahnrad 56 und ein Haltestift 58 folgt.

Wie dies am besten aus Figur 2 hervorgeht, ist ein Spalt 60 zwischen dem rechten Endabschnitt 18 der Rolle 16 und dem Umfang der kreisförmigen Öffnung 22 gebildet, wobei zu verstehen ist, daß ein vergleichbarer Spalt zwischen dem linken Endabschnitt 20 und dem Umfang der kreisförmigen Öffnung 24 in der linken Wand 14 gebildet wird. Um Herstellungsungenauigkeiten in der Rundheit der Rolle 16 und/oder der Anordnung der Rolle 16 in bezug auf die Mitte der Öffnung 22 ausgleichen zu können, nimmt der Spalt 60 in dem bevorzugten Ausführungsbeispiel eine Größe von 6,35 mm ± 1,58 mm ein.

Bis zu diesem Punkt ist der beschriebene Aufbau mehr oder weniger herkömmlich. Dabei ist zu verstehen, daß wahrend die Rolle 16 als Antriebsrolle offenbart ist, die nachfolgend beschriebene Erfindung ebenfalls Anwendung bei jeder anderen Art einer Rolle zum Tragen von Riemen zum Bilden von Ballen angewendet werden könnte, die sich durch die Wände erstreckt, oder sogar bei Rollen angewendet werden kann, die in anderen Erntegutbearbeitungsmaschinen, die Rollen in einer Umgebung verwenden, in der sie mit Erntegut in Berührung kommen können, wobei das Erntegut seinen Weg durch Spalte in den Wänden sucht.

An diametral gegenüberliegenden Stellen der zylindrischen Endabschnitte 18 und 20 der Rolle 16 sind rechte und linke Paare von Abstreifern 62 und 64 oder Abweisern angeschweißt, die sich jeweils in den Spalt 60, der in der rechten Wand 12 angeordnet ist, und in den Spalt zwischen dem linken zylindrischen Endabschnitt und dem Umfang der Öffnung 24 in der linken Wand 14 erstrecken. Jeder Abstreifer 62 und 64 ist mit Bezug auf die Achse A der Rolle 16 angewinkelt und derart angebracht, daß er dazu neigt, das Erntegut von der Wand 12 und 14 wegzubewegen. Es hat sich erwiesen, daß die Abstreifer 62 insbesondere dann zum Bewegen des Ernteguts nach innen wirksam sind, wenn sie zwischen 30 Grad und 60 Grad zu der Achse A der Rolle 16 geneigt sind. In dem bevorzugten Ausführungsbeispiel erstrecken sich die Abstreifer 62 und 64 um eine Entfernung von ungefähr 4,7 mm radial über die Oberflächen der zylindrischen Endabschnitte 18 und 20 hinaus. Während die Abstreifer 62, 64 viele Formen einnehmen könnten, einschließlich einer Ausbildung aus Schweißmaterial, sind sie vorzugsweise aus Draht oder zylindrischen Stangen oder Rundeisen gebildet, die auf die Rolle 16 aufgeschweißt werden, wobei sich die Schweißnaht auf der nachlaufenden Seite des Abstreifers 62, 64 befindet, so daß dem wegzubewegenden Erntegut eine recht glatte Vorlaufkante präsentiert wird. Es wird auch bemerkt, daß die Abstreifer 62 und 64 gut arbeiten, wenn deren äußeren Enden sich so weit erstrecken, daß sie ungefähr gleichauf mit den gegenüberliegenden Enden der Rolle 16 liegen, und wenn sich deren innere Enden gerade innerhalb der Wände 12 und 14 befinden. Die inneren Enden müssen weit genug nach innen von den Wänden 12 und 14 angeordnet sein, um den Bereich sauber zu halten, aber nicht so weit, daß sie ein Wickeln von Erntegut um den Endbereich 18, 20 der Rolle 16 unterstützen. Es ist ebenfalls wichtig, den Abstand zwischen den inneren Enden der Abstreifer 62, 64 und den Wänden 62 und 64 relativ gering zu halten, um eine Berührung zwischen den Abstreifern 62, 64 und den benachbarten Ballenbildungsriemen, die normalerweise mit dichtem Abstand zu den Wänden 12 und 14 wirken, zu reduzieren oder verhindern. Eine Entfernung von 5 mm wurde als zufriedenstellend arbeitend herausgefunden. Es wird ferner bemerkt, daß, während ein Paar von Abstreifern 62, 64 an jedem der sich gegenüberliegenden Endabschnitte 18, 20 der Rolle 16 offenbart ist, herausgefunden wurde, daß ein einziger Abstreifer ebenfalls bewirkt, daß Erntegut von dem Durchgang durch und/oder dem Verstopfen des Spalts 60, der zwischen dem Umfang des Endabschnitts 18 und der Öffnung 22 in der Wand 12 und dem Umfang des zylindrischen Endabschnitts 20 und der Öffnung 24 in der Wand 14 liegt, abgehalten wird.

Es wird davon ausgegangen, daß die Funktion der Erfindung von der vorherigen Beschreibung klar ist. Es ist daher im Grund überflüssig zu bemerken, daß, sobald die Rolle 16 dreht, die Abstreifer 62 bzw. 64 in der Nähe des Spalts 60 und des entsprechenden Spalts an der gegenüberliegenden Seite des Ballenpreßraums 10 Erntegut erfassen und dieses Erntegut nach innen bewegen, so daß es nicht durch die Spalte 60 dringt.

## Patentansprüche

1. Rolle (16) mit wenigstens einer Riemenlauffläche und wenigstens einem zylindrischen Endabschnitt (18, 20) zur Verwendung in einer Erntebergungsmaschine, wobei in dem Bereich zwischen einer Endkante des Endabschnitts (18, 20) und der Riemenlauffläche wenigstens ein Abstreifer (62, 64) befestigt ist.

2. Rolle nach Anspruch 1, **dadurch gekennzeichnet, daß** der Abstreifer (62, 64) mit Bezug auf die Längsachse der Rolle (16) geneigt angeordnet ist.

3. Rolle nach Anspruch 2, **dadurch gekennzeichnet, daß** der Abstreifer (62, 64) eine Neigung von 30 bis 60 Grad zu der Längsachse der Rolle (16) einnimmt.

4. Rolle nach einem oder mehreren der vorherigen Ansprüche, **dadurch gekennzeichnet, daß** dem Abstreifer (62) ein zweiter Abstreifer (64) diametral gegenüber angeordnet ist.

5. Rolle nach einem oder mehreren der vorherigen Anspruche, **dadurch gekennzeichnet, daß** der Abstreifer (62, 64) aus stangenförmigem Material gebildet ist.

6. Rolle nach einem oder mehreren der vorherigen Ansprüche, **dadurch gekennzeichnet, daß** der Abstreifer (62, 64) mit der Endkante des Endabschnitts (18, 20) abschließt.

7. Erntebergungsmaschine mit wenigstens einer Rolle (16) nach einem oder mehreren der vorherigen Ansprüche, die sich durch ein Loch (22, 24) in einer Wand (12, 14) erstreckt.

8. Erntebergungsmaschine nach Anspruch 7, **dadurch gekennzeichnet, daß** zwischen dem Endabschnitt (18, 20) der Rolle (16) und dem Umfang des Lochs (22, 24) ein Spalt von 6,35 mm ± 1,58 mm besteht und der Abstreifer (62, 64) so bemessen ist, daß er radial um ca. 4,7 mm über die Oberfläche des Endabschnitts (18, 20) übersteht.

9. Erntebergungsmaschine nach Anspruch 7 oder 8, **dadurch gekennzeichnet, daß** das axial innenliegende Ende des Abstreifers (62, 64) einen Abstand von der Wand (12, 14) nach innen von ca. 5,08 bis 6,35 mm aufweist.

10. Erntebergungsmaschine nach einem oder mehreren der Ansprüche 7 bis 9, **dadurch gekennzeichnet, daß** die Wände (12, 14) die gegenüberliegenden Seiten eines Ballenpreßraums (10) bilden und die Rolle (16) Riemen zum Bilden eines Ballens tragt.

## Claims

1. A roller (16) with at least one belt running surface and at least one cylindrical end section (18, 20) for use in a harvesting machine, wherein at least one wiper (62, 64) is fixed in the region between an end edge of the end section (18, 20) and the belt running surface.

2. A roller according to claim 1, **characterized in that** the wiper (62, 64) is inclined relative to the longitudinal axis of the roller (16).

3. A roller according to claim 2, **characterised in that** the wiper (62, 64) assumes an inclination of 30 to 60 degrees to the longitudinal axis of the roller (16).

4. A roller according to one or more of the preceding claims, **characterized in that** a second wiper (64) is arranged diametrically opposite the wiper (62).

5. A roller according to one or more of the preceding claims, **characterized in that** the wiper (62, 64) is formed from material of rod form.

6. A roller according to one or more of the preceding claims, **characterized in that** the wiper (62, 64) terminates at the end edge of the end section (18, 20).

7. A harvesting machine with at least one roller (16) according to one or more of the preceding claims and which extends through a hole (22, 24) in a wall (12, 14).

8. A harvesting machine according to claim 7, **characterized in that** there is a gap of 6.35 mm ± 1.58 mm between the end section (18, 20) of the roller (16) and the periphery of the hole (22, 24) and the wiper (62, 64) is so dimensioned that it projects radially by about 4.7 mm beyond the surface of the end section (18, 20).

9. A harvesting machine according to claim 7 or 8, **characterized in that** the axially inner end of the wiper (62, 64) has a distance from the inside from the wall of about 5.08 to 6.35 mm.

10. A harvesting machine according to one or more of claims 7 to 9, **characterized in that** the walls (12, 14) form the opposite sides of baler chamber (10) and the roller (16) carries belts for forming a bale.

## Revendications

1. Rouleau (16) comprenant au moins une surface de roulement d'une courroie et au moins une partie d'extrémité cylindrique (18, 20), destiné à être utilisé dans une moissonneuse, dans lequel au moins une tringle de débourrage (62, 64) est fixée dans la zone entre un bord de la partie d'extrémité (18, 20) et la surface de roulement de la courroie.

2. Rouleau selon la revendication 1, **caractérisé en ce que** la tringle de débourragè (62, 64) est inclinée par rapport à l'axe longitudinal du rouleau (16).

3. Rouleau selon la revendication 2, **caractérisé en ce que** la tringle de débourrage (62, 64) est inclinée selon un angle de 30 à 60 degrés par rapport à l'axe longitudinal du rouleau (16).

4. Rouleau selon une ou plusieurs des revendications précédentes, **caractérisé en ce qu'**une deuxième tringle de débourrage (64) est diamétralement opposée à la tringle de débourrage (62).

5. Rouleau selon une ou plusieurs des revendications précédentes, **caractérisé en ce que** la tringle de débourrage (62, 64) est réalisée dans un matériau en forme de barres.

6. Rouleau selon une ou plusieurs des revendications précédentes, **caractérisé en ce que** la tringle de débourrage (62, 64) est aboutée avec le bord de la partie d'extrémité (18, 20).

7. Moissonneuse comprenant au moins un rouleau (16) selon une ou plusieurs des revendications précédentes, qui s'étend à travers un trou (22, 24) réalisé dans une paroi (12, 14).

8. Moissonneuse selon la revendication 7, **caractérisée en ce qu'**une fente de 6,35 mm ± 1,58 mm est formée entre la partie d'extrémité (18, 20) du rouleau (16) et le pourtour du trou (22, 24) et la tringle de débourrage (62, 64) est dimensionnée de telle sorte qu'elle s'avance dans le sens radial de 4,7 mm environ au-delà de la surface de la partie d'extrémité (18, 20).

9. Moissonneuse selon la revendication 7 ou 8, **caractérisée en ce que** l'extrémité axialement intérieure de la tringle de débourrage (62, 64) est disposée vers l'intérieur à une distance de 5,08 à 6,35 mm de la paroi (12, 14).

10. Moissonneuse selon une des revendications 7 à 9, **caractérisée en ce que** les parois (12, 14) forment les côtés face à face d'une chambre de compression de balles (10) et le rouleau (16) porte des courroies pour former une balle.
